# EUROPÄISCHE PATENTSCHRIFT

(11) **EP 1 484 988 B1**
(45) Veröffentlichungstag und Bekanntmachung des Hinweises auf die Patenterteilung: **18.07.2007**
(21) Anmeldenummer: 03706371.6
(22) Anmeldetag: 23.01.2003
(51) Int. Cl.: A23L 1/31, A23P 1/08

(54) **HERSTELLEN VON LEBENSMITTELN MIT FÜLLUNG**
PRODUCTION OF FOODSTUFFS WITH A FILLING
PRODUCTION DE PRODUITS ALIMENTAIRES FOURRES

(30) Priorität: 20.03.2002 DE 10212456; 10.10.2002 DE 10247283
(43) Veröffentlichungstag der Anmeldung: 15.12.2004
(73) Patentinhaber: Nienstedt GmbH, 45721 Haltern (DE)
(72) Erfinder: GRONEBERG-NIENSTEDT, Petra, 40237 Düsseldorf (DE)
(74) Vertreter: Cohausz, Helge B.
(86) Internationale Anmeldenummer: PCT/EP2003/000640
(87) Internationale Veröffentlichungsnummer: WO 2003/077682

(56) Entgegenhaltungen:
- WO-A-95/00043
- DE-A- 19 753 027
- DE-A- 19 806 391
- DE-U- 29 823 878
- FR-A- 2 145 730
- US-A- 4 474 823

## Beschreibung

Die Erfindung betrifft ein Verfahren zum Herstellen gefrorener Lebensmittel, die eine Füllung aufweisen.

Es sind Lebensmittel in Form einer Tasche bekannt, in deren Inneren eine Füllung ist, wie z.B. beim Cordon Bleu. Darüber hinaus sind Lebensmittel bekannt, die im Inneren eine Füllung aufweisen und rundum geschlossen sind. Beide Arten von Lebensmitteln sind aufwendig in der Herstellung und es geschieht sehr leicht, dass die Füllung spätestens beim Erwärmen des Lebensmittels ausfließt.

Aufgabe der Erfindung ist es, ein Verfahren zum Herstellen gefrorener, eine Füllung aufweisender Lebensmittel zu schaffen, das eine automatische Herstellung in größeren Stückzahlen erlaubt und hierbei ein genaues Einhalten von Gewicht und Form zulässt. Ferner ist Aufgabe der Erfindung, gefüllte Lebensmittel zu schaffen, deren Füllung mit hoher Sicherheit nicht ausfließen kann.

Diese Aufgaben werden erfindungsgemäß dadurch gelöst, dass ein gefrorener Lebensmittel-Rohling unter Druck zu einem Lebensmittelteilstück gepresst wird, das eine Ausnehmung für die Füllung aufweist, im gefrorenen Zustand des ersten Lebensmittelteilstücks in die Ausnehmung des ersten Lebensmittelteilstücks die Füllung gebracht wird und auf das erste Lebensmittelteilstück ein zweites gefrorenes Lebensmittelteilstück gelegt wird, das die Ausnehmung verschließt.
Bei einem solchen Verfahren gelingt es, die beiden Lebensmittelteilstücke, insbesondere die beiden Portionshälften mit genauer Form und Gewicht herzustellen. Die Füllung ist in eine der beiden Hälften oder in beide Hälften bzw. in beide Lebensmittelteilstücke leicht und sicher einbringbar und nach dem Schließen der beiden Lebensmittelteilstücke kann eine sichere Verbindung beider Teile erreicht werden. Hierbei kann mit geringstem Ausschuss und kleinsten Gewichts- und Maßtoleranzen insbesondere automatisch gearbeitet werden.

Einen besonders sicheren Halt beider Lebensmittelteilstücke bzw. -hälften aneinander wird dann erreicht, wenn die Ränder, mit denen die beiden Lebensmittelteilstücke einander berühren, mit einer Flüssigkeit benetzt werden, die eine Haftung im Bereich der Ränder erzeugt. Hierbei kann die Flüssigkeit Wasser und/oder Eiweiß sein oder aufweisen.

In einer weiteren möglichen Ausführung wird vorgeschlagen, dass das zweite Lebensmittelteilstück auch eine Ausnehmung aufweist, die mit der Ausnehmung des ersten Lebensmittelteilstücks einen Hohlraum bildet.

Ferner ist von Vorteil, wenn nach der Befestigung beider Lebensmittelteilstücke aneinander die Außenseite beider Lebensmittelteilstücke mit mindestens einer Außenschicht, insbesondere einer Panade versehen wird. Diese Außenschicht kann die beiden Lebensmittelteilstücke bzw. -portionen aneinander halten.

Ausführungsbeispiele der Erfindung sind in den Zeichnungen dargestellt und werden im folgenden näher beschrieben.

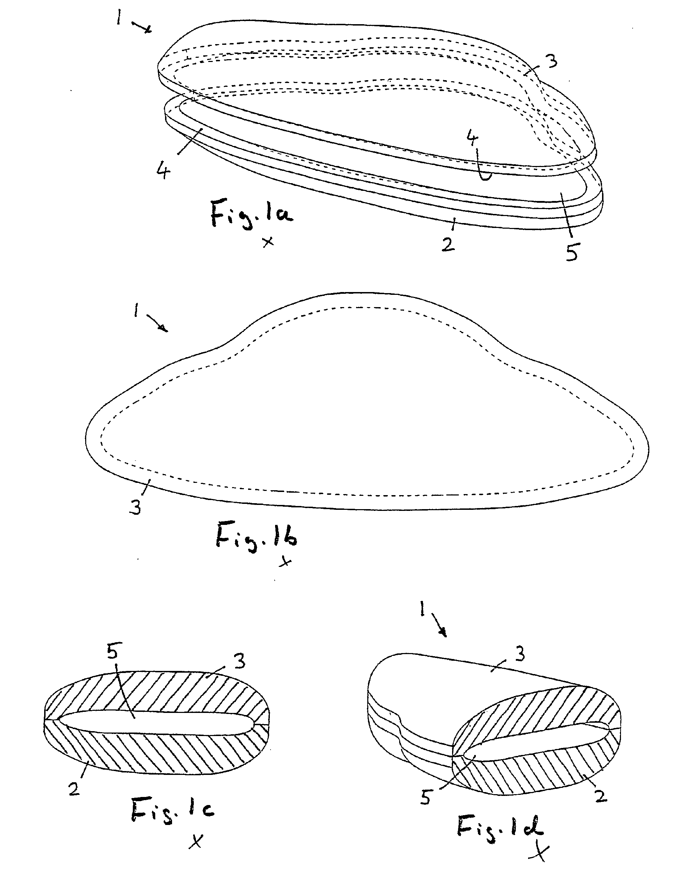

Es zeigen
- Figur 1a - d:: zwei Lebensmittelteilstücke mit je einer Ausnehmung;

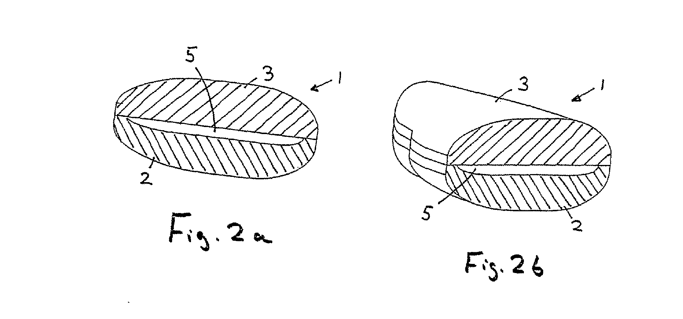

- Figur 2a . b:: zwei Lebensmittelteilstücke, von denen nur eines eine Ausnehmung aufweist.

Tiefgefrorene Lebensmittelteilstücke 2, 3 (z.B. aus Fisch- oder Fleischtiefkühlblöcken gesägte Rohlinge) werden in geeignet geformte Mulden bzw. Formen verbracht und unter Druckanwendung verformt. Die Eingangstemperatur der Lebensmittelportionen beträgt dabei vorzugsweise -5°C bis -20°C. Das dem Verformungsprozess unter Druckanwendung zugrunde liegende Verfahren wird in der Patentschrift DE 198 06 391 beschrieben.

Die Beschickung der Formen geschieht manuell oder automatisch. Die entstehenden tiefgefrorenen Produkte bzw. Portionsteile / Lebensmittelteilstücke sind so gestaltet, dass je zwei oder mehrere von ihnen zu einer Tasche 1 zusammenfügt werden können.

In eines 2 dieser taschenförmigen Teilstücke werden vor dem Zusammenfügen ein weiteres Lebensmittel oder mehrere weitere Lebensmittel eingelegt, vorzugsweise Kräuterbutter, Käse, Schinken, Würzen, angemachte Füllungen oder Kombinationen davon. Anschließend werden das erste Teilstück 2, in welches die Füllung eingebracht wurde, und ein weiteres leeres zweites Teilstück 3 zusammengefügt. Dieses Verfahren ist auch für mehrere Teilstücke geeignet.

Dabei kann vor dem Zusammenfügen ein Zusatzmittel, vorzugsweise Wasser oder Eiweiß oder sonstige Lebensmittel geeignete Bindemittel, auf die Ränder 4 der Teilstücke 2, 3 aufgebracht werden, um den Zusammenhalt bei der Weiterverarbeitung (wie z.B. Bestäuben, Panieren, Garen) zu gewährleisten. Die Geometrie der Ausnehmung 5 bzw. Kavität kann dabei beliebig sein. Vorzugsweise enthält sie einen geeigneten Höhenverlauf, der ein Einfallen des Außenmantels bei der Weiterverarbeitung minimiert.

Die beiden Lebensmittelteilstücke 2, 3 können dieselbe Form mit je einer Ausnehmung 5 aufweisen. Alternativ kann aber auch das zweite Teilstück 3 keine Ausnehmung oder nur eine Ausnehmung geringer Tiefe besitzen, um als Deckel oder als Grundplatte für das erste Teilstück 2 zu dienen.

Ferner kann das erste Teilstück flach sein oder nur eine geringe, d.h. nur eine flache Ausnehmung aufweisen und als Grundplatte dienen und nach Auflegen der Füllung von dem zweiten Teilstück überdeckt werden, das eine größere Ausnehmung aufweist.

## Patentansprüche

1. Verfahren zum Herstellen gefrorener Lebensmittel (1), die eine Füllung aufweisen, **dadurch gekennzeichnet,**
- **dass** ein gefrorener Lebensmittel-Rohling unter Druck zu einem ersten Lebensmittelteilstück (2) gepresst wird, das eine Ausnehmung (5) für die Füllung aufweist;
- **dass** im gefrorenen Zustand des ersten Lebensmittelteilstücks (2) in die Ausnehmung (5) des ersten Lebensmittelteilstücks (2) die Füllung gebracht wird, und
- **dass** auf das erste Lebensmittelteilstück (2) ein zweites gefrorenes Lebensmittelteilstück (3) gelegt wird, das die Ausnehmung (5) verschließt.

2. Verfahren zum Herstellen gefrorener Lebensmittel (1), die eine Füllung aufweisen, **dadurch gekennzeichnet,**
- **dass** ein gefrorener Lebensmittel-Rohling unter Druck zu einem ersten Lebensmittelteilstück gepresst wird,
- **dass** im gefrorenen Zustand des ersten Lebensmittelteilstücks auf das erste Lebensmittelteilstück die Füllung gebracht wird, und
- **dass** auf das erste Lebensmittelteilstück ein zweites gefrorenes Lebensmittelteilstück gelegt wird, das eine Ausnehmung für die Füllung aufweist.

3. Verfahren nach Anspruch 1 oder 2, **dadurch gekennzeichnet, dass** die Ränder (4), mit denen die beiden Lebensmittelteilstücke (2, 3) einander berühren, mit einer Flüssigkeit benetzt werden, die eine Haftung im Bereich der Ränder erzeugt.

4. Verfahren nach Anspruch 3, **dadurch gekennzeichnet, dass** die Flüssigkeit Wasser und/oder Eiweiß ist oder aufweist.

5. Verfahren nach einem der vorstehenden Ansprüche, **dadurch gekennzeichnet, dass** die Ausnehmung (5) des zweiten Lebensmittelteilstücks (3) mit der Ausnehmung (5) des ersten Lebensmittelteilstücks (2) einen gemeinsamen Hohlraum bildet.

6. Verfahren nach einem der vorstehenden Ansprüche, **dadurch gekennzeichnet, dass** nach der Befestigung beider Lebensmittelteilstücke (2, 3) aneinander die Außenseite beider Lebensmittelteilstücke mit mindestens einer Außenschicht, insbesondere einer Panade, versehen wird.

7. Verfahren nach einem der vorstehenden Ansprüche, **dadurch gekennzeichnet, dass** der Lebensmittel-Rohling Fisch-, Rinder-, Schweine- oder Geflügelfleisch aufweist.

## Claims

1. Method of producing frozen foodstuffs (1) which have a filling, **characterised**
- **in that** a frozen foodstuff blank is pressed under pressure to form a first part (2) of the foodstuff, which has a recess (5) for the filling,
- **in that** the filling is placed in the recess (5) in the first part (2) of the foodstuff while the first part (2) of the foodstuff is in the frozen state, and
- **in that** a second frozen part (3) of the foodstuff, which closes off the recess (5), is laid on the first part (2) of the foodstuff.

2. Method of producing frozen foodstuffs (1) which have a filling, **characterised**
- **in that** a frozen foodstuff blank is pressed under pressure to form a first part of the foodstuff,
- **in that** the filling is placed on the first part of the foodstuff while the first part of the foodstuff is in the frozen state, and
- **in that** a second frozen part of the foodstuff, which has a recess for the filling, is laid on the first part of the foodstuff.

3. Method according to claim 1 or 2, **characterised in that** the edges (4) by which the two parts (2, 3) of the foodstuff are in contact with one another are wetted with a liquid which produces adhesion in the region of the edges.

4. Method according to claim 3, **characterised in that** the liquid is or contains water and/or egg white.

5. Method according to one of the foregoing claims, **characterised in that** the recess (5) in the second part (3) of the foodstuff forms, with the recess (5) in the first part (2) of the foodstuff, a common cavity.

6. Method according to one of the foregoing claims, **characterised in that**, after the two parts (2, 3) of the foodstuff have been fastened to one another, the outside of the two parts of the foodstuff is provided with at least one outer layer, and in particular with a panada.

7. Method according to one of the foregoing claims, **characterised in that** the foodstuff blank contains the flesh of fish, cattle, pigs or poultry.

## Revendications

1. Procédé pour produire des produits alimentaires congelés (1) qui comportent une garniture, **caractérisé en ce**
- **qu**'une ébauche de produit alimentaire congelée est formée sous pression en un premier morceau partiel de produit alimentaire (2), qui présente un évidement (5) pour la garniture ;
- **qu**'à l'état congelé du premier morceau partiel de produit alimentaire (2) la garniture est introduite dans l'évidement (5) du premier morceau partiel de produit alimentaire (2), et
- **qu**'un second morceau partiel de produit alimentaire (3) congelé, qui ferme l'évidement (5), est placé sur le premier morceau partiel de produit alimentaire (2).

2. Procédé pour produire des produits alimentaires congelés (1) qui comportent une garniture, **caractérisé en ce**
- **qu**'une ébauche de produit alimentaire congelée est formée sous pression en un premier morceau partiel de produit alimentaire,
- **qu**'à l'état congelé du premier morceau partiel de produit alimentaire la garniture est introduite sur le premier morceau partiel de produit alimentaire, et
- **qu**'un second morceau partiel de produit alimentaire congelé, qui présente un évidement pour la garniture, est placé sur le premier morceau partiel de produit alimentaire.

3. Procédé suivant l'une des revendications 1 et 2, **caractérisé en ce que** les bords (4), avec lesquels les deux morceaux partiels de produit alimentaire (2, 3) sont au contact l'un de l'autre, sont humectés d'un liquide qui produit une adhérence dans la zone des bords.

4. Procédé suivant la revendication 3, **caractérisé en ce que** le liquide est de l'eau et/ou du blanc d'oeuf, ou comporte l'un et/ou l'autre de ces derniers.

5. Procédé suivant l'une des revendications précédentes, **caractérisé en ce que** l'évidement (5) du second morceau partiel de produit alimentaire (3) forme une cavité commune avec l'évidement (5) du premier morceau partiel de produit alimentaire (2).

6. Procédé suivant l'une des revendications précédentes, **caractérisé en ce que** le côté extérieur des deux morceaux partiels de produit alimentaire est muni d'au moins une couche extérieure, en particulier d'une panure, après la fixation des deux morceaux partiels de produit alimentaire (2, 3) l'un contre l'autre.

7. Procédé suivant l'une des revendications précédentes, **caractérisé en ce que** l'ébauche de produit alimentaire comporte de la chair de poisson, de veau, de porc ou de volaille.
